(19) Europäisches Patentamt
European Patent Office
Office européen des brevets

(11) **EP 2 863 388 B1**

(12) **EUROPEAN PATENT SPECIFICATION**

(45) Date of publication and mention
of the grant of the patent:
**12.09.2018 Bulletin 2018/37**

(51) Int Cl.:
**G10L 19/002** $^{(2013.01)}$

(21) Application number: **13816528.7**

(86) International application number:
**PCT/CN2013/076393**

(22) Date of filing: **29.05.2013**

(87) International publication number:
**WO 2014/008786 (16.01.2014 Gazette 2014/03)**

(54) **BIT ALLOCATION METHOD AND DEVICE FOR AUDIO SIGNAL**

BITZUORDNUNGSVERFAHREN UND -VORRICHTUNG FÜR TONSIGNALE

PROCÉDÉ ET DISPOSITIF D'ATTRIBUTION DE BITS POUR SIGNAL AUDIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2012 CN 201210243316**

(43) Date of publication of application:
**22.04.2015 Bulletin 2015/17**

(73) Proprietor: **Huawei Technologies Co., Ltd.
Longgang District
Shenzhen, Guangdong 518129 (CN)**

(72) Inventors:
• **QI, Fengyan
Shenzhen,
Guangdong 518129 (CN)**

• **MIAO, Lei
Shenzhen,
Guangdong 518129 (CN)**
• **LIU, Zexin
Shenzhen,
Guangdong 518129 (CN)**

(74) Representative: **Kreuz, Georg Maria
Huawei Technologies Duesseldorf GmbH
Riesstraße 25
80992 München (DE)**

(56) References cited:
**EP-A1- 1 852 849      EP-A1- 2 402 939
CN-A- 1 910 656       CN-A- 101 101 755
CN-A- 101 499 279     CN-A- 102 208 188
US-A1- 2009 313 029**

## Description

### TECHNICAL FIELD

The present disclosure relates to the field of audio technologies, and in particular, to a method and an apparatus for allocating bits in an audio signal.

### BACKGROUND

Audio quality is increasingly emphasized in current communication transmission. Therefore, it is required that music quality should be improved as much as possible during coding and decoding while speech quality is ensured. Because a music signal contains very rich information, a CELP (Code Excited Linear Prediction, code excited linear prediction) coding mode for traditional speech cannot be used. A transform coding method is generally used to process a music signal in the frequency domain, so as to increase coding quality of the music signal. However, how to efficiently encode information by effectively using a limited number of coding bits effectively becomes a current main research topic of audio coding.

In a current audio coding technology, FFT (Fast Fourier Transform, fast Fourier transform) or MDCT (Modified Discrete Cosine Transform, modified discrete cosine transform) is generally used to transform a time-domain signal into a frequency-domain signal, and then the frequency-domain signal is encoded. During transform coding, frequency-domain coefficients are allocated to different bands, a normalized energy is calculated for each band, and energies of coefficients in each band are normalized; then, bit allocation is performed; and finally, the intra-band coefficients are quantized according to bits allocated to each band, where bit allocation is an extremely critical step. Bit allocation refers to allocating, in a process of quantizing spectral coefficients, bits that are of an audio signal and used to quantize the spectral coefficients to subbands according to a subband feature of a spectrum, that is, allocating coding resources available for the audio signal to the subbands, where the coding resources are generally represented by bits.

Specifically, a current bit allocation process includes: allocating a band to a spectral signal, for example, increasing bandwidth gradually from a low frequency to a high frequency according to a theory of critical band; allocating a band to a spectrum, calculating a normalized energy norm for each subband, and quantizing the normalized energy to obtain a subband normalization factor wnorm; arranging subbands in descending order of values of subband normalization factors wnorm; and performing bit allocation, for example, allocating the number of bits to each subband in an iterative manner according to the value of the subband normalization factor wnorm. The allocating bits in an iterative manner may be further divided into the following steps: step 1: Initialize the number of bits and an iteration factor fac of each subband; step 2: Find out a band corresponding to a greatest subband normalization factor wnorm; step 3: Add a bandwidth value to the number of bits allocated to the band, and subtract the iteration factor fac from the value of the subband normalization factor wnorm; step 4: Iterate step 2 and step 3 until the bit allocation is completed. It can be learned that, in the prior art, a smallest unit of bits during each allocation is a bandwidth value and a smallest number of bits required during quantization is less than the bandwidth value. As a result, this allocation of an integer number of bits is relatively inefficient in a case of a low bit rate, and bits cannot be allocated to many bands while excessive bits are allocated to another band. Because bits are allocated to all bands in a cyclic and iterative manner, subbands with different bandwidth have a same cyclic and iteration parameter, and therefore an allocation result is very random and quantization is relatively discrete and previous and subsequent frames are discontinuous.

It can be learned that, bit allocation greatly affects performance in the case of a low bit rate. During bit allocation, bits are usually allocated to all bands according to a value of a normalized energy of each subband; and in a case of an insufficient bit rate, this allocation is very random and relatively discrete, and produces a phenomenon of discontinuous quantization in the time domain.

EP 2402939 A1 discloses an audio codec for a processing device, which determines first and second bit allocations for each frame of input audio. First bits are allocated for a first frequency band, and second bits are allocated for a second frequency band. The allocations are made on a frame-by-frame basis based on the energy ratio between the two bands.

### SUMMARY

Embodiments of the present invention provide a method and an apparatus as defined in the appended claims.

In a case of a low or medium bit rate, the techniques of the present disclosure can, by means of grouping, ensure relatively stable allocation of previous and subsequent frames and reduce an impact of partial discontinuity caused by global allocation.

**BRIEF DESCRIPTION OF DRAWINGS**

FIG. 1 is a flowchart of an example of a method for allocating bits in an audio signal;
FIG. 2 is a schematic structural diagram of an example of an apparatus for allocating bits in an audio signal; and
FIG. 3 is a schematic structural diagram of an example of an apparatus for allocating bits in an audio signal.

**DESCRIPTION OF EMBODIMENTS**

The following clearly and completely describes the techniques of the present disclosure with reference to the accompanying drawings. The described embodiments are a part rather than all of the embodiments of the present invention. All other embodiments obtained by a person of ordinary skill in the art based on the embodiments of the present invention without creative efforts shall fall within the protection scope of the present invention.

Coding and decoding technical solutions are widely applied to various electronic devices, for example, a mobile phone, a wireless apparatus, a personal data assistant (PDA), a handheld or portable computer, a GPS receiver/navigator, a camera, an audio/video player, a camcorder, a video recorder, and a monitoring device. Usually, this type of electronic device includes an audio coder or an audio decoder, where the audio coder or decoder may be directly implemented by a digital circuit or a chip, for example, a DSP (digital signal processor), or be implemented by a software code driving a processor to execute a process in the software code.

As an example, in an audio coding technical solution, an audio time-domain signal is first converted to a frequency-domain signal, and then coding bits are allocated to the audio frequency-domain signal for encoding; an encoded signal is transmitted to a decoder by using a communications system; and the decoder decodes and restores the encoded signal.

In the present invention, bit allocation is performed according to a grouping theory and signal characteristics. Bands are grouped first, and an energy of a group is weighted according to a characteristic of each group; bit allocation is performed for each group according to the weighted energy; and bits are allocated to each band according to signal characteristics inside each group. Because bits are first allocated to a whole group, a phenomenon of discontinuous allocation is avoided, so that coding quality of different signals is improved. In addition, signal characteristics are considered when bits are allocated inside a group, so that a limited number of bits can be allocated to an important audio band that affects perception.

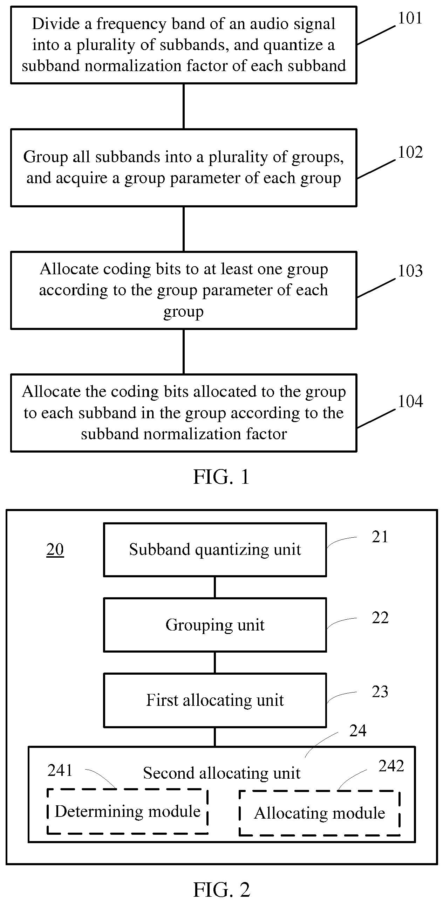

FIG. 1 is a flowchart of an example of a method for allocating bits in an audio signal.

101. Divide a frequency band of an audio signal into a plurality of subbands, and quantize a subband normalization factor of each subband.

MDCT transform is used as an example in the following description. An MDCT transform is performed on an input audio signal first to obtain a frequency-domain coefficient. The MDCT transform here may include processes such as window addition, time-domain aliasing, and discrete DCT transform.

For example, a sine window is added to an input time-domain signal $x(n)$:

$$h(n) = \sin\left[\left(n + \frac{1}{2}\right)\frac{\pi}{2L}\right], \tag{1}$$

where n=0, ..., 2L - 1 and L represents a frame length of the signal,
and an obtained window-added signal is as follows:

$$x_w(n) = \begin{cases} h(n)x_{OLD}(n), & n = 0, \mathrm{K}, L-1 \\ h(n)x(n-L), & n = L, \mathrm{K}, 2L-1 \end{cases} \tag{2}$$

Then, a time-domain aliasing operation is performed:

$$\tilde{x} = \begin{bmatrix} 0 & 0 & -\mathrm{J}_{L/2} & -\mathrm{I}_{L/2} \\ \mathrm{I}_{L/2} & -\mathrm{J}_{L/2} & 0 & 0 \end{bmatrix} \mathrm{x}_w \tag{3}$$

$\mathbf{I}_{L/2}$ and $\mathbf{J}_{L/2}$ represent diagonal matrixes with $L/2$ orders respectively:

$$\mathbf{I}_{L/2} = \begin{bmatrix} 1 & & 0 \\ & \mathbf{O} & \\ 0 & & 1 \end{bmatrix}, \quad \mathbf{J}_{L/2} = \begin{bmatrix} 0 & & 1 \\ & \mathbf{N} & \\ 1 & & 0 \end{bmatrix} \quad (4)$$

A discrete DCT transform is performed on a time-domain aliased signal, and finally a frequency-domain MDCT coefficient is obtained:

$$y(k) = \sum_{n=0}^{L-1} \mathcal{K}(n) \cos\left[\left(n + \frac{1}{2}\right)\left(k + \frac{1}{2}\right)\frac{\pi}{L}\right], \qquad k = 0, \mathrm{K}, L-1 \quad (5)$$

Then, a frequency-domain envelope is extracted from the MDCT coefficient and is quantized. The whole band is divided into some subbands with different frequency-domain resolutions, and a normalization factor of each subband is extracted, and the subband normalization factor is quantized.

For example, for an audio signal sampled at 32 kHz, its corresponding frequency band is 16 kHz bandwidth; and if a frame length is 20 ms (640 sampling points), the band may be divided to the following 44 subbands:

8, 8, 8, 8, 8, 8, 8, 8, 8, 8, 8, 8, 8, 8, 8, 8,

16, 16, 16, 16, 16, 16, 16, 16,
24, 24, 24, 24, 24, 24, 24, 24, 24, 24, 24, 24,

32, 32, 32, 32, 32, 32, 32, 32

The subbands are first grouped into several groups, and then the subbands are further grouped inside each group, and a normalization factor of each subband may be defined as follows:

$$Norm(p) = \sqrt{\frac{1}{L_p} \sum_{k=s_p}^{e_p} y(k)^2}, \qquad p = 0, \mathrm{K}, P-1 \quad (6)$$

where $L_p$ represents the number of coefficients in a subband, $s_p$ represents a start point of a subband, $e_p$ represents an end point of a subband, and P represents the total number of subbands.

After the normalization factor is obtained, the normalization factor may be quantized in the logarithm domain to obtain a quantized subband normalization factor wnorm.

102. Group all subbands into a plurality of groups, and acquire a group parameter of each group, where the group parameter is used to represent a signal characteristic and an energy attribute of an audio signal of the corresponding group, and one group of the plurality of groups includes one or more subbands.

In addition, subbands with similar features and energies may be grouped into one group. For example, subbands with same bandwidth may be grouped into one group. Preferably, adjacent subbands with same bandwidth are grouped into one group. For example, all subbands may be grouped into four groups. Then, in a case of a low bit rate, only first two groups or first three groups are used, and bit allocation is not performed for the remaining groups.

Alternatively, subbands may be grouped according to a relationship between normalization energies norm of the subbands. That is, subbands with approximate subband normalization factors wnorm are grouped into one group. For example, the following method may be used to determine whether subband normalization factors of subbands are approximate: comparing a subband normalization factor wnorm[i] (i = 1, ..., P-1, where P is the total number of subbands) of a subband with a predetermined threshold K. If wnorm[i] is greater than the predetermined threshold K, the subband number i is recorded, and finally subbands with a subband normalization factor wnorm[i] greater than the predetermined threshold K are grouped into one group, and the remaining subbands are grouped into another group. It should be understood that a plurality of predetermined thresholds may be set according to different requirements, so as to obtain more groups.

Optionally, adjacent subbands with approximate subband normalization factors may also be grouped into one group. For example, the following method may be used to determine whether subband normalization factors of adjacent subbands are approximate: wnorm_diff[i], a difference between subband normalization factors of the adjacent subbands, is calculated first, where wnorm_diff[i]= abs(wnorm[i] - wnorm[i-1]) and i = 1, ..., P-1. P is the total number of subbands. If wnorm_diff[i] is less than a predetermined threshold K', it indicates that the subband normalization factors of the adjacent subbands are approximate, so as to determine adjacent subband numbers that can be grouped into one group.

Once grouping of subbands is complete, a group parameter of each group may be acquired, so as to represent an energy attribute of each group. Generally, the group parameter may include one or more of the following:, a sum group_wnorm of intra-group subband normalization factors, and a peak-to-average ratio group_sharp of intra-group subband normalization factors.

Specifically, group_sharp, which is the sum of intra-group subband normalization factors, is a sum of subband normalization factors of all bands in a group, that is, $group\_wnorm[i] = \sum_{b=S_i}^{E_i} wnorm[b]$ where $S_i$ represents a start subband in group i, and $E_i$ represents an end subband in group i.

Alternatively, group_sharp, which is the peak-to-average ratio of the intra-group subband normalization factors, is a ratio of a peak value of intra-group subband normalization factors to an average value of intra-group subband normalization factors. That is, $group\_sharp[i] = \dfrac{group\_peak[i]}{group\_avg[i]}$, where group_peak[i] represents the peak value of intra-group subband normalization factors in group i, and group_avg[i] represents the average value of intra-group subband normalization factors in group i.

Alternatively, group_peak, which is the peak value of intra-group subband normalization factors, is a maximum value of subband normalization factors of all subbands in the group, that is, $group\_peak[i] = Max(wnorm[S_i],...., wnorm[E_i])$, where wnorm[$S_i$] represents a subband normalization factor of the start subband in group i, and wnorm[Ei] represents a subband normalization factor of the end subband in group i.

Alternatively, group_avg, which is the average value of intra-group subband normalization factors, is an average value of subband normalization factors of all subbands in the group, that is, $group\_avg[i] = \dfrac{group\_wnorm[i]}{E_i - S_i + 1}$, where group_wnorm[i] represents a sum of intra-group subband normalization factors of group i, $S_i$ represents the start subband in group i, and $E_i$ represents the end subband in group i.

103. Allocate coding bits to at least one group according to the group parameter of each group, where a sum of coding bits allocated to the at least one group is the number of coding bits of the audio signal.

Because the foregoing group parameter represents an energy attribute of each group, bits of the audio signal can be allocated to each group according to the group parameter. In this way, in a case of an insufficient bit rate, a grouping principle is used and the energy attribute of each group is considered, so that bit allocation for the audio signal is more concentrated and inter-frame bit allocation is more continuous. It should be understood that the group parameters are not limited to the ones listed above and may also be another parameter that can represent an energy attribute of a group. In one technique, in a case of an insufficient bit rate, bits are allocated only to some groups. For example, for a group in which a sum of intra-group subband normalization factors is zero, no bit is allocated; for another example, when the number of bits is very small, there is also be a group that is not allocated any bit. That is, on a basis that the foregoing group parameters are obtained, coding bits may be allocated to the at least one group according to the sum of intra-group subband normalization factors of each group, where the sum of coding bits allocated to the at least one group is the number of coding bits of the audio signal.

Further, the group parameters may also be adjusted to optimize a result of allocation of bits of the audio signal to each group. For example, different weights are assigned to group parameters for different groups according to different allocation requirements, so that a limited number of bits are allocated to a proper group. Then, the bits are further allocated inside this group, so that the bit allocation is no longer discrete, which facilitates encoding of the audio signal.

The following describes an example of an implementation manner. For example, after the sum group_wnorm of intra-group subband normalization factors of each group and the peak-to-average ratio group_sharp of intra-group subband normalization factors of each group are acquired, the sum group_wnorm of intra-group subband normalization factors may be weighted according to the peak-to-average ratio group_sharp of intra-group subband normalization factors, to obtain a weighted sum group_wnorm_w of intra-group subband normalization factors.

Specifically, a peak-to-average ratio group_sharp[i] of intra-group subband normalization factors of a first group is compared with a peak-to-average ratio group_sharp[i-1] of intra-group subband normalization factors of a second group. If comparison between the peak-to-average ratio of intra-group subband normalization factors of the first group and the peak-to-average ratio of intra-group subband normalization factors of the second group is greater than a first threshold, the sum of intra-group subband normalization factors of the first group is adjusted according to a first weighting factor, and the sum of intra-group subband normalization factors of the second group is adjusted according to a second weighting factor, and vice versa. That is, if comparison between the peak-to-average ratio of intra-group subband normalization factors of the second group and the peak-to-average ratio of intra-group subband normalization factors of the first group is greater than a second threshold, the sum of intra-group subband normalization factors of the second group is adjusted according to the first weighting factor, and the sum of intra-group subband normalization factors of the first group is adjusted according to the second weighting factor.

For example, if group_sharp[i] - group_sharp[i-1] > a, group_wnorm_w[i] = b x group_wnorm[i]; or, if group_sharp[i-1] - group_sharp[i] > c, group_wnorm[i-1] = b x group_wnorm[i-1], where group number i = 1, ..., P-1, P is the total number of subbands, b is a weight, a is the first threshold, and c is the second threshold. It should be understood that a, b, and c may be selected according to a bit allocation requirement.

Herein, only a simple weighting method is described exemplarily. A person of ordinary skill in the art should easily use another weighting method to adjust a weight of a subband by using different weighting factors. For example, a weight of a subband to which more signal bits need to be allocated may be increased, and a weight of a subband to which a signal bit does not need to be allocated or a few signal bits need to be allocated may be decreased.

Then, bits of the audio signal are allocated to each group according to the weighted sum of intra-group subband normalization factors. For example, the number of bits for the group is determined according to a ratio of the weighted sum group_wnorm[i] of intra-group subband normalization factors to the sum sum_wnorm of subband normalization factors of all subbands, and bits of the audio signal are allocated to the group according to the determined number of bits for the group. The total number group_bits of bits of each group is determined by using the following formula:group_bits[i] = sum_bits x group_wnorm[i]/sum_wnorm, where sum_bits represents the total number of bits of the audio signal that need to be allocated, and sum wnorm represents the sum of subband normalization factors of all subbands.

After the bits are allocated to the groups, coding bits allocated to each group may further be allocated to subbands in the group.

104. Allocate the coding bits allocated to the at least one group to each subband in each group of the at least one group according to the subband normalization factor of each subband in each group of the at least one group.

It should be understood that an existing iterative and cyclic allocation method may be used to allocate bits to subbands in each group. However, the iterative and cyclic allocation method still causes that a bit allocation result in each group is very random and that previous and subsequent frames are discontinuous. Therefore, bits that are of the audio signal and allocated to the group may be allocated to subbands in the group with reference to signal characteristics of different audio signals, that is, different signal types, and according to subband normalization factors in the group.

In addition, in this technique, in a case of an insufficient bit rate, if a limited number of bits are allocated to all subbands in the group, a bit allocation effect is affected. Therefore, the number band_num of subbands to which bits may be allocated in the group may be determined first; then, the bits that are of the audio signal and allocated to the group are allocated, according to a type of the audio signal and subband normalization factors in the group, to subbands to which bits are allocated in the group, where the number of subbands to which bits are allocated in the group equals the number band_num of subbands.

The number of subbands to which bits are initially allocated in each group may be determined according to the number of bits for the group and a third threshold, where the third threshold represents a smallest number of bits used to quantize a normalized spectral coefficient. For example, if 13 bits are allocated to a group and the third threshold is 7 bits, the number of subbands to which bits are initially allocated in the group is 2. Then, the number band_num of subbands to which bits are allocated in the group is determined according to the number of subbands to which bits are initially allocated in the group and the total number of subbands in the group.

For example, if the number of subbands to which bits are initially allocated in the group is greater than a product of the total number of subbands in the group and a scale factor k, it is determined that the value of band_num is the total number of subbands in the group; if the number of subbands to which bits are initially allocated in the group is greater than the product of the total number of subbands in the group and the scale factor k, the value of band_num is the number of subbands to which bits are initially allocated in the group. The scale factor k here is an empiric factor and may be 0.75 or another numeric value. The process may also be simplified, so that the number band_num of subbands to which bits are allocated in the group is a smaller number of subbands between the number of subbands to which bits are allocated in the group and the total number of subbands in the group.

Then, bits are allocated to band_num subbands according to the type of audio signal in the group and with reference to subband normalization factors in the group, where band_num is the number of subbands to which bits are allocated in the group. The type of the audio signal in the group may be determined according to the peak-to-average ratio group_sharp of the intra-group subband normalization factors of the group. If it is determined, according to the peak-to-average ratio group_sharp of the intra-group subband normalization factors that the audio signal is a normal (normal) signal, the existing iterative and cyclic allocation method may be used to perform bit allocation for the group;

and if it is determined that the audio signal of the group is a harmonic (harmonic) signal, the existing iterative and cyclic allocation method may be used to perform bit allocation for the group, or the following method a or method b may be used to perform bit allocation.

Method a:

Step 1: Arrange subband normalization factors of all subbands in the group in descending order, and select the first N subbands, where N is the number band_num of subbands to which bits are allocated in the group.
Step 2: Initialize the number of bits of the N subbands to 1, and initialize the number j of cyclings to 0.
Step 3: Determine the total number band_wnorm of subband normalization factors of subbands with a subband normalization factor greater than 0 in the N subbands.
Step 4: Allocate the numbers of bits to the subbands with a subband normalization factor greater than 0 in the N subbands.
Step 5: Determine whether the number of bits allocated to the last subband of the N subbands is less than a fixed threshold fac; and if the number of bits allocated to the last subband of the N subbands is less than the fixed threshold fac, set the number of bits allocated to the subband to 0.
Step 6: Add 1 to the number j of cyclings.
Step 3 to step 6 are repeated until the number j of cyclings equals N.
Step 7: Restore an original arrangement sequence of all subbands in the group, that is, restore an arrangement sequence of all subbands before the subband normalization factor of each subband is quantized.

Method b:

Step 1: Arrange subband normalization factors of all subbands in the group in descending order, and select the first N subbands, where N is the number band_num of subbands to which bits are allocated in the group.
Step 2: Initialize the number of bits of the N subbands to 1, initialize the number j of cyclings to 0, and initialize the number bit_sum of allocated bits to 0.
Step 3: Determine the total number band_wnorm of subband normalization factors of subbands with a subband normalization factor greater than 0 in the N subbands.
Step 4: Allocate numbers of bits to the subbands with a subband normalization factor greater than 0 in the N subbands.
Step 5: Determine whether the number of bits allocated to the N subbands is less than a fixed threshold fac; and if the number of bits allocated to the N subbands is less than the fixed threshold fac, set the number of bits allocated to the N subbands to 0.
Step 6: Calculate the total number temp_sum of bits allocated to all the N subbands.
Step 7: Add 1 to the number j of iterations.
Step 8: Determine whether temp_sum equals bit_sum. If temp_sum equals bit_sum, perform step 10; if the number of subbands to which bits are initially allocated in the group is greater than the product of the total number of subbands in the group and the scale factor k, continue to perform step 9.
Step 9: Update bit_sum and assign a value of temp_sum to bit_sum.
Step 3 to step 9 are repeated until the number j of cyclings equals N.
Step 10: Restore an original arrangement sequence of all subbands in the group.

It should be understood that, besides the foregoing method a or method b, another method may also be used to perform bit allocation in the group. In addition, method a and the method b may also be combined with a method for determining band_num, that is, performing allocation in the group with reference to different audio signal characteristics. For example, if the number of subbands to which bits are initially allocated in the group is greater than a product of the total number of subbands in the group and the scale factor k, method a is used; and if the number of subbands to which bits are initially allocated in the group is less than or equal to the product of the total number of subbands in the group and the scale factor k, method b is used.

In conclusion, a process of allocating bits to subbands in a group is as follows: the first N subbands with greatest subband normalization factors are selected from all subbands in the group and used as target subbands for allocation, where N is the number band_num of subbands to which bits are allocated in the group; then, numbers of bits are allocated to the N subbands in sequence according to subband normalization factors of the N subbands; and finally, all subbands in the group are restored to an original arrangement sequence.

According to signal characteristics of different audio signals, bits can be effectively allocated to a band in which a signal can be heard and perceived. For example, for bands with a strong harmonic, bits need to be allocated to all bands with a harmonic wave; and for signals with relatively even spectral energies, bits need to be evenly allocated.

With reference to the foregoing grouping manner, a group may be further segmented, that is, subbands in the group may be further grouped into a plurality of subgroups, and a subgroup parameter of each subgroup is acquired; and then, bits allocated to the group are allocated to each subgroup according to the subgroup parameter of each subgroup. Finally, bits that are of the audio signal and allocated to each subgroup are allocated to each subband in each subgroup according to the subband normalization factor. One possibility is that the subbands are grouped continuously until there is only one band in each group.

Use of the grouping manner in this technique ensures relatively stable allocation of previous and subsequent frames; and bit allocation with different emphases is performed inside groups according to signal characteristics, so that allocated bits are all used to quantize important spectral information, thereby improving coding quality of an audio signal.

It can be learned from above that the method for allocating bits in an audio signal according to this technique can, by means of grouping, ensure relatively stable allocation of previous and subsequent frames and reduce impact of partial discontinuity caused by global allocation. In addition, a different threshold parameter may be set for bit allocation in each group, so that bits are allocated more adaptively. Bit allocation with different emphases is performed inside groups according to spectral signal characteristics. For example, for a pseudo harmonic signal with a relatively concentrated spectrum, bits are mainly allocated to a subband with a high energy, and more bits do not need to be allocated to inter-harmonic subbands; and for a signal with a relatively smooth spectrum, smoothness between subbands is ensured as much as possible during bit allocation. This ensures that allocated bits are all used to quantize important spectral information.

The following describes, with reference to FIG. 2, a schematic structure of an example of an apparatus for allocating bits in an audio signal.

In FIG. 2, the apparatus 20 for allocating bits in an audio signal includes a subband quantizing unit 21, a grouping unit 22, a first allocating unit 23, and a second allocating unit 24.

The subband quantizing unit 21 is configured to divide a frequency band of an audio signal into a plurality of subbands, and quantize a subband normalization factor of each subband.

The grouping unit 22 is configured to group the plurality of subbands into a plurality of groups, where one group of the plurality of groups includes one or more subbands, and acquire a group parameter of each group, where the group parameter is used to represent a signal characteristic and an energy attribute of an audio signal of the corresponding group.

The first allocating unit 23 is configured to allocate coding bits to at least one group according to the group parameter of each group, where a sum of coding bits allocated to the at least one group is the number of coding bits of the audio signal.

Optionally, the grouping unit 22 may be configured to group subbands with same bandwidth into one group, so that the plurality of subbands is grouped into a plurality of groups. Alternatively, the grouping unit 22 may be configured to group subbands with approximate subband normalization factors into one group, so that the plurality of subbands is grouped into a plurality of groups. Generally, subbands in each group may be adjacent.

Optionally, the grouping unit 22 is configured to acquire a sum of intra-group subband normalization factors of each group and a peak-to-average ratio of intra-group subband normalization factors of each group, where the sum of intra-group subband normalization factors is a sum of subband normalization factors of all subbands in the group, and the peak-to-average ratio of intra-group subband normalization factors is a ratio of a peak value of the intra-group subband normalization factors to an average value of the intra-group subband normalization factors, where the peak value of the intra-group subband normalization factors is a maximum value of subband normalization factors of all subbands in the group, and the average value of the intra-group subband normalization factors is an average value of subband normalization factors of all subbands in the group.

Further, the grouping unit 22 is further configured to weight the sum of intra-group subband normalization factors of each group according to the peak-to-average ratio of intra-group subband normalization factors of each group to obtain a weighted sum of intra-group subband normalization factors of each group.

Optionally, the grouping module 22 may be configured to compare a peak-to-average ratio of intra-group subband normalization factors of a first group with a peak-to-average ratio of intra-group subband normalization factors of a second group; and if comparison between the peak-to-average ratio of intra-group subband normalization factors of the first group and the peak-to-average ratio of intra-group subband normalization factors of the second group is greater than a first threshold, adjust a sum of intra-group subband normalization factors of the first group according to a first weighting factor, and adjust a sum of intra-group subband normalization factors of the second group according to a second weighting factor.

Optionally, the first allocating unit 23 is configured to allocate coding bits to the at least one group according to a sum of intra-group subband normalization factors of each group, where the sum of coding bits allocated to the at least one group is the number of coding bits of the audio signal. Alternatively, the first allocating unit 23 is configured to allocate coding bits to the at least one group according to the weighted sum of intra-group subband normalization factors, where the sum of coding bits allocated to the at least one group is the number of coding bits of the audio signal. Alternatively, the first allocating unit 23 may be configured to determine the number of bits for the group according to a ratio of the weighted sum of intra-group subband normalization factors of the group to a sum of subband normalization factors of all subbands in the group, and allocate coding bits of the audio signal to the group according to the number of bits for the group.

The second allocating unit 24 is configured to allocate the coding bits allocated to the at least one group to each subband in each group of the at least one group according to the subband normalization factor of each subband in each group of the at least one group.

Further, the second bit allocating module 24 may include a determining module 241 and an allocating module 242. The determining module 241 is configured to determine the number band_num of subbands to which bits are allocated in the group; the allocating module 242 is configured to allocate, according to the subband normalization factors in the group, bits that are of the audio signal and allocated to the group to the subbands to which bits are allocated in the group, where the number of subbands to which bits are allocated in the group equals the number band_num of subbands to which bits are allocated in the group.

Optionally, the determining submodule 241 may be configured to determine, according to the number of bits for the group and a third threshold, the number of subbands to which bits are initially allocated in the group, where the third threshold represents a smallest number of bits used to quantize a normalized spectral coefficient, and determine that a smaller value between the number of subbands to which bits are initially allocated in the group and the total number of subbands in the group is band_num, the number of subbands to which bits are allocated in the group.

Alternatively, the determining submodule 241 may be configured to determine the number of subbands to which bits are initially allocated in the group according to the number of bits for the group and a third threshold, where the third threshold represents a smallest number of bits used to quantize a normalized spectral coefficient; compare the number of subbands to which bits are allocated in the group with a product of the total number of subbands in the group and a scale factor k, where the scale factor k is used to adjust the total number of subbands in the group; if the number of subbands to which bits are allocated in the group is less than the product of the total number of subbands in the group and the scale factor k, determine that the number of subbands to which bits are allocated in the group is the number of subbands to which bits are initially allocated; if the number of subbands to which bits are initially allocated in the group is greater than the product of the total number of subbands in the group and the scale factor k, determine that the number of subbands to which bits are allocated in the group is the total number of subbands in the group.

Optionally, the allocating module 242 may be configured to select, from all subbands in the group, the first N subbands with greatest subband normalization factors as target subbands for allocation, where N is the number of subbands to which bits are allocated in the group; allocate numbers of bits to the N subbands in sequence according to subband normalization factors of the N subbands; and restore an original arrangement sequence of all subbands in the group.

For example, the allocating module 242 specifically performs the following steps:

Step 1: Arrange subband normalization factors of all subbands in the group in descending order, and select the first N subbands, where N is the number band_num of subbands to which bits are allocated in the group.

Step 2: Initialize the number of bits of the N subbands to 1, and initialize the number j of cyclings to 0.

Step 3: Determine the total number band_wnorm of subband normalization factors of subbands with a subband normalization factor greater than 0 in the N subbands.

Step 4: Allocate numbers of bits to the subbands with a subband normalization factor greater than 0 in the N subbands.

**[0100]** Step 5: Determine whether the number of bits allocated to the last subband of the N subbands is less than a fixed threshold fac; and if the number of bits allocated to the last subband of the N subbands is less than the fixed threshold fac, set the number of bits allocated to the subband to 0.

Step 6: Add 1 to the number j of cyclings.

Step 3 to step 6 are repeated until the number j of cyclings equals N.

Step 7: Restore an original arrangement sequence of all subbands in the group.

Optionally, the allocating submoudle 242 may be configured to perform the following specific steps:

Step 1: Arrange subband normalization factors of all subbands in the group in descending order, and select the first N subbands, where N is the number band_num of subbands to which bits are allocated in the group.

Step 2: Initialize the number of bits of the N subbands to 1, initialize the number j of cyclings to 0, and initialize the number bit_sum of allocated bits to 0.

Step 3: Determine the total number band_wnorm of subband normalization factors of subbands with a subband normalization factor greater than 0 in the N subbands.

Step 4: Allocate numbers of bits to the subbands with a subband normalization factor greater than 0 in the N subbands.

Step 5: Determine whether the number of bits allocated to the N subbands is less than a fixed threshold fac; and if the number of bits allocated to the N subbands is less than the fixed threshold fac, set the number of bits allocated to the N subbands to 0.

Step 6: Calculate the total number temp_sum of bits allocated to all the N subbands.

Step 7: Add 1 to the number j of cyclings.

Step 8: Determine whether temp_sum equals bit_sum. If temp_sum equals bit_sum, perform step 10; if the number of subbands to which bits are initially allocated in the group is greater than the product of the total number of subbands in the group and the scale factor k, continue to perform step 9.

Step 9: Update bit_sum and assign a value of temp_sum to bit_sum.

Step 3 to step 9 is repeated until the number j of cyclings equals N.

Step 10: Restore an original arrangement sequence of all subbands in the group.

In addition, in the apparatus for allocating bits in an audio signal shown in FIG. 2, the first allocating unit 23 may further group subbands in the group into a plurality of subgroups and acquire a subgroup parameter of each subgroup; and then, the first allocating unit 23 allocates bits allocated to the group to each subgroup according to the subgroup parameter of each subgroup. Then, the second allocating unit 24 is configured to allocate bits that are of the audio signal and allocated to each subgroup to each subband in each subgroup according to the subband normalization factor.

It can be learned from above that the apparatus for allocating bits in an audio signal can, by means of grouping, ensure relatively stable allocation of previous and subsequent frames and reduce impact of partial discontinuity caused by global allocation. In addition, a different threshold parameter may be set for bit allocation in each group, so that bits are allocated more adaptively. Bit allocation with different emphases is performed inside groups according to spectral signal characteristics. For example, for a pseudo harmonic signal with a relatively concentrated spectrum, bits are mainly allocated to a subband with a high energy, and more bits do not need to be allocated to inter-harmonic subbands; and for a signal with a relatively smooth spectrum, smoothness between subbands is ensured as much as possible during bit allocation. This ensures that allocated bits are all used to quantize important spectral information.

A person of ordinary skill in the art may be aware that, in combination with the examples disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing methods, and details are not described herein again.

It should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the present disclosure.

In addition, functional units may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure may be implemented in a form of a software product. The software product is stored in a storage medium, and includes several instructions for instructing a computer device (which may be a personal computer, a server, or a network device) to perform all or a part of the steps of the methods described in the present disclosure. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

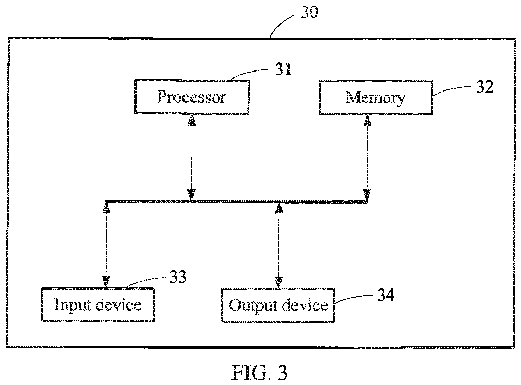

FIG. 3 is a schematic block diagram of another embodiment of an apparatus 30 for allocating bits in an audio signal. The apparatus 30 includes a processor 31, a memory 32, an input device 33, an output device 34, and the like, which communicate with each other by means of a bus. The processor 31 invokes a program stored in the memory 32, and can perform all steps of the foregoing embodiments of the method for allocating bits in an audio signal.

The processor 31 is configured to execute a program stored in the memory 32, and implement two-way communication with another apparatus by means of the bus.

The memory 32 may include a RAM and a ROM, or any fixed storage medium or movable storage medium, and is configured to store a program that can execute the techniques of the present disclosure or data to be processed in the techniques of the present disclosure.

The memory 32 and the processor 31 may also be integrated into a physical module to which the techniques of the present disclosure are applied, where the program that implements the techniques of the present disclosure is stored in and run on the physical module.

The input device 33 may include any appropriate device such as a keyboard and a mouse, and is configured to receive an input from a user or an input from another device, and send the received input to the processor 31.

The output device 34 is configured to output a result of allocating bits for an audio signal, which may be a display, a printer, or the like.

**Claims**

1. A method for allocating coding bits to an audio signal, comprising:

   converting an audio time-domain signal to an audio frequency-domain signal; and
   allocating coding bits to the audio frequency-domain signal for encoding;
   wherein allocating the coding bits to the audio frequency-domain signal comprises: dividing (101) a frequency band of the audio signal into a plurality of subbands, and quantizing a subband normalization factor of each subband;
   grouping (102) the plurality of subbands into a plurality of groups, wherein one group of the plurality of groups comprises one or more subbands, and acquiring a group parameter of each group, wherein the group parameter is used to represent a signal characteristic and an energy attribute of an audio signal of the corresponding group;
   allocating (103) coding bits to at least one group according to the group parameter of each group, wherein a sum of coding bits allocated to the at least one group is the number of coding bits available for the audio signal; and
   allocating (104) the coding bits allocated to the at least one group to each subband in each group of the at least one group according to the subband normalization factor of each subband in each group of the at least one group; **characterized in that**:
   the acquiring a group parameter of each group comprises:

   acquiring a sum of intra-group subband normalization factors of the respective group and a peak-to-average ratio of intra-group subband normalization factors of the group, wherein the subband normalization factor for a subband is defined as:

$$Norm(p) = \sqrt{\frac{1}{L_p} \sum_{k=s_p}^{e_p} y(k)^2}, \qquad p = 0, \ldots, P-1$$

   where $L_p$ represents the number of coefficients $y(k)$ in the subband, $s_p$ represents a start point of the subband, $e_p$ represents an end point of the subband, and $P$ represents the total number of subbands, wherein the sum of intra-group subband normalization factors is a sum of subband normalization factors of all subbands in the group, and the peak-to-average ratio of intra-group subband normalization factors is a ratio of a peak value of the intra-group subband normalization factors to an average value of the intra-group subband normalization factors, wherein the peak value of the intra-group subband normalization factors is a maximum value of subband normalization factors of all subbands in the group, and the average value of the intra-group subband normalization factors is an average value of subband normalization factors of all subbands in the group; and
   weighting the sum of intra-group subband normalization factors of each group according to the peak-to-average ratio of intra-group subband normalization factors of each group to obtain a weighted sum of intra-group subband normalization factors of each group; and

the allocating (103) coding bits to at least one group according to the group parameter of each group comprises:

allocating coding bits to the at least one group according to the weighted sum of intra-group subband normalization factors of each group, wherein the sum of coding bits allocated to the at least one group is the number of coding bits available for the audio signal;
wherein the weighting the sum of intra-group subband normalization factors of each group according to the peak-to-average ratio of intra-group subband normalization factors of each group comprises:

comparing a peak-to-average ratio of intra-group subband normalization factors of a first group with a peak-to-average ratio of intra-group subband normalization factors of a second group; and
if comparison between the peak-to-average ratio of intra-group subband normalization factors of the first group and the peak-to-average ratio of intra-group subband normalization factors of the second group is greater than a first threshold, adjusting the sum of intra-group subband normalization factors of the first group according to a first weighting factor, and adjusting the sum of intra-group subband normalization factors of the second group according to a second weighting factor.

2. The method according to claim 1, wherein the allocating coding bits to the at least one group according to the weighted sum of intra-group subband normalization factors of each group, wherein the sum of coding bits allocated to the at least one group is the number of coding bits of the audio signal, comprises:
determining the number of bits for the group according to a ratio of the weighted sum of intra-group subband normalization factors of each group to a sum of subband normalization factors of all subbands in the group, and allocating bits of the audio signal to the group according to the number of bits for the group.

3. The method according to claim 1 or 2, wherein the allocating the coding bits allocated to the at least one group to each subband in each group of the at least one group according to the subband normalization factor of each subband in each group of the at least one group comprises:

determining the number of subbands to which bits are allocated in the group; and
allocating, according to subband normalization factors in the group, coding bits that are of the audio signal and allocated to the group to subbands to which bits are allocated in the group, wherein the number of subbands to which bits are allocated in the group equals the number of subbands to which bits are allocated in the group.

4. The method according to claim 3, wherein the determining the number of subbands to which bits are allocated in the group comprises:

determining the number of subbands to which bits are initially allocated in the group according to the number of bits for the group and a third threshold, wherein the third threshold represents a smallest number of bits used to quantize a normalized spectral coefficient; and
determining the number of subbands to which bits are allocated in the group according to the number of subbands to which bits are initially allocated in the group and the total number of subbands in the group.

5. The method according to claim 4, wherein the determining the number of subbands to which bits are allocated in the group according to the number of subbands to which bits are initially allocated in the group and the total number of subbands in the group comprises:
determining that a smaller value between the number of subbands to which bits are initially allocated in the group and the total number of subbands in the group is the number of subbands to which bits are allocated in the group.

6. The method according to claim 4, wherein the determining the number of subbands to which bits are allocated in the group according to the number of subbands to which bits are initially allocated in the group and the total number of subbands in the group comprises:

comparing the number of subbands to which bits are initially allocated in the group with a product of the total number of subbands in the group and a scale factor k, wherein the scale factor k is used to adjust the total number of subbands in the group; and
if the number of subbands to which bits are initially allocated in the group is less than the product of the total number of subbands in the group and the scale factor k, determining that the number of subbands to which bits are allocated in the group is the number of subbands to which bits are initially allocated in the group; if the number of subbands to which bits are initially allocated in the group is greater than the product of the total number of subbands in the group and the scale factor k, determining that the number of subbands to which bits are allocated in the group is the total number of subbands in the group.

7. The method according to any one of claims 3 to 6, wherein the allocating, according to subband normalization factors in the group, coding bits that are of the audio signal and allocated to the group to subbands to which bits are allocated in the group comprises:

selecting, from all subbands in the group, the first N subbands with greatest subband normalization factors as target subbands for allocation, wherein N is the number of subbands to which bits are allocated in the group; and allocating the numbers of bits to the N subbands in sequence according to subband normalization factors of the N subbands.

8. The method according to claim 1, wherein the allocating coding bits to at least one group according to the group parameter of each group, wherein a sum of coding bits allocated to the at least one group is the number of coding bits of the audio signal, comprises:

dividing subbands in the group into a plurality of subgroups, and acquiring a subgroup parameter of each subgroup; and allocating bits allocated to the group to each subgroup according to the subgroup parameter of each subgroup; and the allocating the coding bits allocated to the at least one group to each subband in each group of the at least one group according to the subband normalization factor of each subband in each group of the at least one group comprises: allocating bits that are of the audio signal and allocated to each subgroup to each subband in each subgroup according to the subband normalization factor.

9. The method according to any one of claims 1 to 8, wherein the grouping the plurality of subbands into a plurality of groups comprises: grouping subbands with same bandwidth into one group, so that the plurality of subbands is grouped into a plurality of groups.

10. The method according to claim 1, wherein subbands in each group of the plurality of groups are adjacent.

11. An apparatus for allocating coding bits to an audio signal, wherein the apparatus is configured to convert an audio time-domain signal to an audio frequency-domain signal and to allocate coding bits to the audio frequency-domain signal for encoding, wherein the apparatus comprises:

a subband quantizing unit (21), configured to divide a frequency band of the audio signal into a plurality of subbands, and quantize a subband normalization factor of each subband; a grouping unit (22), configured to group the plurality of subbands into a plurality of groups, wherein one group of the plurality of groups comprises one or more subbands, and acquire a group parameter of each group, wherein the group parameter is used to represent a signal characteristic and an energy attribute of an audio signal of the corresponding group; a first allocating unit (23), configured to allocate coding bits to at least one group according to the group parameter of each group, wherein a sum of coding bits allocated to the at least one group is the number of coding bits available for the audio signal; and a second allocating unit (24), configured to allocate the coding bits allocated to the at least one group to each subband in each group of the at least one group according to the subband normalization factor of each subband in each group of the at least one group, **characterized in that** the grouping unit (22) is configured to:

acquire a sum of intra-group subband normalization factors of the respective group and a peak-to-average ratio of intra-group subband normalization factors of the group, wherein the subband normalization factor for a subband is defined as:

$$Norm(p) = \sqrt{\frac{1}{L_p} \sum_{k=s_p}^{e_p} y(k)^2}, \qquad p = 0, \ldots, P-1$$

where $L_p$ represents the number of coefficients y(k) in the subband, $s_p$ represents a start point of the subband, $e_p$ represents an end point of the subband, and $P$ represents the total number of subbands, wherein the sum of intra-group subband normalization factors is a sum of subband normalization factors of all subbands in the group, and the peak-to-average ratio of intra-group subband normalization factors is a ratio of a peak value of the intra-group subband normalization factors to an average value of the intra-group subband normalization factors, wherein the peak value of the intra-group subband normalization factors is a maximum value of subband normalization factors of all subbands in the group, and the average value of the intra-group subband normalization factors is an average value of subband normalization factors of all subbands in the group; and

weight the sum of intra-group subband normalization factors of each group according to the peak-to-average ratio of intra-group subband normalization factors of each group to obtain a weighted sum of intra-group subband normalization factors of each group;

the first allocating unit is configured to:

allocate coding bits to the at least one group according to the weighted sum of intra-group subband normalization factors of each group, wherein the sum of coding bits allocated to the at least one group is the number of coding bits available for the audio signal;

wherein the grouping unit (22) is specifically configured to:

compare a peak-to-average ratio of intra-group subband normalization factors of a first group with a peak-to-average ratio of intra-group subband normalization factors of a second group; and

if comparison between the peak-to-average ratio of intra-group subband normalization factors of the first group and the peak-to-average ratio of intra-group subband normalization factors of the second group is greater than a first threshold, adjust the sum of intra-group subband normalization factors of the first group according to a first weighting factor, and adjust the sum of intra-group subband normalization factors of the second group according to a second weighting factor.

12. The apparatus according to claim 11, wherein the first allocating unit (23) is specifically configured to:
determine the number of bits for the group according to a ratio of the weighted sum of intra-group subband normalization factors of each group to a sum of subband normalization factors of all subbands in the group, and allocate bits of the audio signal to the group according to the number of bits for the group.

13. The apparatus according to claim 11 or 12, wherein the second allocating unit (24) comprises:

a determining module (241), configured to determine the number of subbands to which bits are allocated in the group; and

an allocating module (242), configured to allocate, according to subband normalization factors in the group, coding bits that are of the audio signal and allocated to the group to subbands to which bits are allocated in the group, wherein the number of subbands to which bits are allocated in the group equals the number of subbands to which bits are allocated in the group.

14. The apparatus according to claim 13, wherein the determining module (241) is specifically configured to:

determine the number of subbands to which bits are initially allocated in the group according to the number of bits for the group and a third threshold, wherein the third threshold represents a smallest number of bits used to quantize a normalized spectral coefficient; and

determine that a smaller value between the number of subbands to which bits are initially allocated in the group and the total number of subbands in the group is the number of subbands to which bits are allocated in the group.

15. The apparatus according to claim 13, wherein the determining module (241) is specifically configured to:

determine the number of subbands to which bits are initially allocated in the group according to the number of bits for the group and a third threshold, wherein the third threshold represents a smallest number of bits used to quantize a normalized spectral coefficient; and

compare the number of subbands to which bits are initially allocated in the group with a product of the total number of subbands in the group and a scale factor k, wherein the scale factor k is used to adjust the total number of subbands in the group; and

if the number of subbands to which bits are initially allocated in the group is less than the product of the total number of subbands in the group and the scale factor k, determine that the number of subbands to which bits are allocated in the group is the number of subbands to which bits are initially allocated in the group; if the number of subbands to which bits are initially allocated in the group is greater than the product of the total number of subbands in the group and the scale factor k, determine that the number of subbands to which bits are allocated in the group is the total number of subbands in the group.

16. The apparatus according to any one of claims 13 to 15, wherein the allocating module (242) is specifically configured to:

select, from all subbands in the group, the first N subbands with greatest subband normalization factors as target subbands for allocation, wherein N is the number of subbands to which bits are allocated in the group; and allocate the numbers of bits to the N subbands in sequence according to subband normalization factors of the N subbands.

17. The apparatus according to claim 11, wherein:
the first allocating unit (23) is specifically configured to:

group subbands in the group into a plurality of subgroups, and acquire a subgroup parameter of each subgroup; and

allocate bits allocated to the group to each subgroup according to the subgroup parameter of each subgroup; and the second allocating unit (24) is specifically configured to:
allocate bits that are of the audio signal and allocated to each subgroup to each subband in each subgroup according to the subband normalization factor.

18. The apparatus according to any one of claims 11 to 17, wherein the grouping unit (22) is specifically configured to:
group subbands with same bandwidth into one group, so that the plurality of subbands is grouped into a plurality of groups.

19. The apparatus according to claim 11, wherein subbands in each group of the plurality of groups are adjacent.

**Patentansprüche**

1. Verfahren zum Zuordnen von Kodierbits zu einem Audiosignal, umfassend:

Konvertieren eines Audio-Zeitdomänensignals in ein Audio-Frequenzdomänensignal; und
Zuordnen von Kodierbits zu dem Audio-Frequenzdomänensignal zum Kodieren;
wobei das Zuordnen der Kodierbits zu dem Audio-Frequenzdomänensignal umfasst:

Teilen (101) eines Frequenzbands des Audiosignals in eine Vielzahl von Subbändern, und Quantisieren eines Subbandnormalisierungsfaktors für jedes Subband;
Gruppieren (102) der Vielzahl von Subbändern in eine Vielzahl von Gruppen, wobei eine Gruppe der Vielzahl von Gruppen ein oder mehrere Subbänder umfasst, und Erfassen eines Gruppenparameters von jeder Gruppe, wobei der Gruppenparameter verwendet wird, um ein Signalcharakteristikum und ein Energieattribut eines Audiosignals der entsprechenden Gruppe zu repräsentieren;
Zuordnen (103) von Kodierbits zu mindestens einer Gruppe gemäß dem Gruppenparameter jeder Gruppe, wobei eine Summe von Kodierbits, die der mindestens einen Gruppe zugeordnet sind, die Anzahl der Kodierbits ist, die für das Audiosignal verfügbar sind; und
Zuordnen (104) der Kodierbits, die der mindestens einen Gruppe zugeordnet sind, zu jedem Subband in jeder Gruppe der mindestens einen Gruppe gemäß dem Subband-Normalisierungsfaktor für jedes Subband in jeder Gruppe der mindestens einen Gruppe;
**dadurch gekennzeichnet, dass**:
das Erfassen eines Gruppenparameters jeder Gruppe umfasst:

Erfassen einer Summe von gruppeninternen Subband-Normalisierungsfaktoren der jeweiligen Gruppe und eines Verhältnisses von Spitzenwert zu Durchschnitt der gruppeninternen Subband-Normalisierungsfaktoren der Gruppe, wobei der Subband-Normalisierungsfaktor für ein Subband definiert ist als:

$$Norm(p) = \sqrt{\frac{1}{L_p} \sum_{k=s_p}^{e_p} y(k)^2}, \qquad p = 0, \ldots, P-1$$

wobei $L_P$ die Anzahl der Koeffizienten y(k) in dem Subband repräsentiert, $s_p$ einen Startpunkt des Subbands repräsentiert, $e_p$ einen Endpunkt des Subbands repräsentiert, und $P$ die Gesamtanzahl der Subbänder repräsentiert, wobei die Summe der gruppeninternen Subband-Normalisierungsfaktoren eine Summe der Subband-Normalisierungsfaktoren aller Subbänder in der Gruppe ist, und das Verhältnis von Spitzenwert zu Durchschnitt der gruppeninternen Subband-Normalisierungsfaktoren ein Verhältnis eines Spitzenwerts der gruppeninternen Subband-Normalisierungsfaktoren zu einem Durchschnittswert der gruppeninternen Subband-Normalisierungsfaktoren ist, wobei der Spitzenwert der gruppeninternen Subband-Normalisierungsfaktoren ein Maximalwert der Subband-Normalisierungsfaktoren aller Subbänder in der Gruppe ist und der Durchschnittswert der gruppeninternen Subband-Normalisierungsfaktoren ein Durchschnittswert der Subband-Normalisierungsfaktoren aller Subbänder in der Gruppe ist; und

Gewichten der Summe der gruppeninternen Subband-Normalisierungsfaktoren jeder Gruppe gemäß dem Verhältnis von Spitzenwert zu Durchschnitt der gruppeninternen Subband-Normalisierungsfaktoren von jeder Gruppe, um eine gewichtete Summe der gruppeninternen Subband-Normalisierungsfaktoren von jeder Gruppe zu erhalten; und das Zuordnen (103) von Kodierbits zu mindestens einer Gruppe gemäß dem Gruppenparameter jeder Gruppe umfasst:

Zuordnen von Kodierbits zu der mindestens einen Gruppe gemäß der gewichteten Summe der gruppeninternen Subband-Normalisierungsfaktoren jeder Gruppe, wobei die Summe von Kodierbits, die der mindestens einen Gruppe zugeordnet sind, die Anzahl der Kodierbits ist, die für das Audiosignal verfügbar sind;

wobei das Gewichten der Summe der gruppeninternen Subband-Normalisierungsfaktoren jeder Gruppe gemäß dem Verhältnis von Spitzenwert zu Durchschnitt der gruppeninternen Subband-Normalisierungsfaktoren von jeder Gruppe umfasst:

Vergleichen eines Verhältnisses von Spitzenwert zu Durchschnitt der gruppeninternen Subband-Normalisierungsfaktoren einer ersten Gruppe mit einem Verhältnis von Spitzenwert zu Durchschnitt der gruppeninternen Subband-Normalisierungsfaktoren einer zweiten Gruppe; und

falls der Vergleich zwischen dem Verhältnis von Spitzenwert zu Durchschnitt von gruppeninternen Subband-Normalisierungsfaktoren der ersten Gruppe und dem Verhältnis von Spitzenwert zu Durchschnitt von gruppeninternen Subband-Normalisierungsfaktoren der zweiten Gruppe größer als ein erster Schwellenwert ist,

Anpassen der Summe der gruppeninternen Subband-Normalisierungsfaktoren der ersten Gruppe gemäß einem ersten Gewichtungsfaktor, und Anpassen der Summe der gruppeninternen Subband-Normalisierungsfaktoren der zweiten Gruppe gemäß einem zweiten Gewichtungsfaktor.

2. Verfahren nach Anspruch 1, wobei das Zuordnen von Kodierbits zu der mindestens einen Gruppe gemäß der gewichteten Summe der gruppeninternen Subband-Normalisierungsfaktoren jeder Gruppe, wobei die Summe von Kodierbits, die der mindestens einen Gruppe zugeordnet sind, die Anzahl der Kodierbits für das Audiosignal ist, umfasst:

Ermitteln der Anzahl der Bits für die Gruppe gemäß einem Verhältnis der gewichteten Summe der gruppeninternen Subband-Normalisierungsfaktoren jeder Gruppe zu einer Summe der Subband-Normalisierungsfaktoren aller Subbänder in der Gruppe, und Zuordnen von Bits des Audiosignals zu der Gruppe gemäß der Anzahl der Bits für die Gruppe.

3. Verfahren nach Anspruch 1 oder 2, wobei das Zuordnen der Kodierbits, die der mindestens einen Gruppe zugeordnet sind, zu jedem Subband in jeder Gruppe der mindestens einen Gruppe gemäß dem Subband-Normalisierungsfaktor jedes Subbands in jeder Gruppe der mindestens einen Gruppe umfasst:
Ermitteln der Anzahl der Subbänder, denen Bits zugeordnet sind, in der Gruppe; und Zuordnen von Kodierbits, die von dem Audiosignal sind und der Gruppe zugeordnet sind, gemäß Subband-Normalisierungsfaktoren in der Gruppe zu Subbändern, denen Bits zugeordnet sind, in der Gruppe, wobei die Anzahl der Subbänder, denen Bits zugeordnet sind, in der Gruppe der Anzahl der Subbänder, denen Bits zugeordnet sind, in der Gruppe entspricht.

4. Verfahren nach Anspruch 3, wobei das Ermitteln der Anzahl der Subbänder, denen Bits zugeordnet sind, in der Gruppe umfasst:

Ermitteln der Anzahl der Subbänder, denen Bits anfangs zugeordnet sind, in der Gruppe gemäß der Anzahl der Bits für die Gruppe und einem dritten Schwellenwert, wobei der dritte Schwellenwert eine kleinste Anzahl an Bits repräsentiert, die verwendet wurden, um einen normalisierten Spektralkoeffizienten zu quantisieren; und Ermitteln der Anzahl der Subbänder, denen Bits zugeordnet sind, in der Gruppe gemäß der Anzahl der Subbänder, denen Bits anfangs zugeordnet sind, in der Gruppe und der Gesamtanzahl der Subbänder in der Gruppe.

5. Verfahren nach Anspruch 4, wobei das Ermitteln der Anzahl der Subbänder, denen Bits zugeordnet sind, in der Gruppe gemäß der Anzahl der Subbänder, denen Bits anfangs zugeordnet sind, in der Gruppe und der Gesamtanzahl der Subbänder in der Gruppe, umfasst:
Ermitteln, dass ein kleinerer Wert zwischen der Anzahl der Subbänder, denen Bits anfangs zugeordnet sind, in der Gruppe und der Gesamtanzahl der Subbänder in der Gruppe die Anzahl der Subbänder, denen Bits zugeordnet sind, in der Gruppe ist.

6. Verfahren nach Anspruch 4, wobei das Ermitteln der Anzahl der Subbänder, denen Bits zugeordnet sind, in der Gruppe gemäß der Anzahl der Subbänder, denen Bits anfangs zugeordnet sind, in der Gruppe und der Gesamtanzahl der Subbänder in der Gruppe umfasst:

Vergleichen der Anzahl der Subbänder, denen Bits anfangs zugeordnet sind, in der Gruppe mit einem Produkt der Gesamtanzahl von Subbändern in der Gruppe und einem Skalierungsfaktor k, wobei der Skalierungsfaktor k verwendet wird, um die Gesamtanzahl der Subbänder in der Gruppe anzupassen; und
falls die Anzahl der Subbänder, denen Bits anfangs zugeordnet sind, in der Gruppe kleiner als das Produkt der Gesamtanzahl der Subbänder in der Gruppe und des Skalierungsfaktors k ist, Ermitteln, dass die Anzahl der Subbänder, denen Bits zugeordnet sind, in der Gruppe die Anzahl der Subbänder, denen Bits anfangs zugeordnet sind, in der Gruppe ist; falls die Anzahl der Subbänder, denen Bits anfangs zugeordnet sind, in der Gruppe größer als das Produkt der Gesamtanzahl der Subbänder in der Gruppe und des Skalierungsfaktors k ist, Ermitteln, dass die Anzahl der Subbänder, denen Bits zugeordnet sind, in der Gruppe die Gesamtanzahl der Subbänder in der Gruppe ist.

7. Verfahren nach einem der Ansprüche 3 bis 6, wobei das Zuordnen von Kodierbits, die von dem Audiosignal sind und der Gruppe von Subbändern zugeordnet sind, denen Bits zugeordnet sind, in der Gruppe gemäß Subband-Normalisierungsfaktoren in der Gruppe umfasst:

Auswählen der ersten N Subbänder mit größten Subband-Normalisierungsfaktoren aus allen Subbändern in der Gruppe als Zielsubbänder für die Zuordnung, wobei N die Anzahl der Subbänder, denen Bits zugeordnet sind, in der Gruppe ist; und
Zuordnen der Anzahlen an Bits zu den N Subbändern in Folge gemäß Subband-Normalisierungsfaktoren der N Subbänder.

8. Verfahren nach Anspruch 1, wobei das Zuordnen von Kodierbits zu mindestens einer Gruppe gemäß dem Gruppenparameter jeder Gruppe, wobei eine Summe von Kodierbits, die der mindestens einen Gruppe zugeordnet sind, die Anzahl der Kodierbits des Audiosignals ist, umfasst:

Teilen von Subbändern in der Gruppe in eine Vielzahl von Subgruppen, und Erfassen eines Subgruppenparameters jeder Subgruppe; und
Zuordnen von Bits, die der Gruppe zugeordnet sind, zu jeder Subgruppe gemäß dem Subgruppenparameter jeder Subgruppe; und
das Zuordnen der Kodierbits, die der mindestens einen Gruppe zugeordnet sind, zu jedem Subband in jeder Gruppe der mindestens einen Gruppe gemäß dem Subband-Normalisierungsfaktor für jedes Subband in jeder Gruppe der mindestens einen Gruppe umfasst:

Zuordnen von Bits, die von dem Audiosignal sind und jeder Subgruppe zugeordnet sind, zu jedem Subband in jeder Subgruppe gemäß dem Subband-Normalisierungsfaktor.

9. Verfahren nach einem der Ansprüche 1 bis 8, wobei das Gruppieren der Vielzahl von Subbändern in eine Vielzahl von Gruppen umfasst:
Gruppieren von Subbändern mit derselben Bandbreite in eine Gruppe, so dass die Vielzahl der Subbänder in eine Vielzahl von Gruppen gruppiert ist.

10. Verfahren nach Anspruch 1, wobei Subbänder in jeder Gruppe der Vielzahl von Gruppen benachbart sind.

11. Vorrichtung zum Zuordnen von Kodierbits zu einem Audiosignal, wobei die Vorrichtung konfiguriert ist, um ein Audio-Zeitdomänensignal in ein Audio-Frequenzdomänensignal zu konvertieren und Kodierbits dem Audio-Frequenzdomänensignal zum Kodieren zuzuordnen, wobei die Vorrichtung umfasst:

eine Subbandquantisiereinheit (21), die konfiguriert ist, um ein Frequenzband des Audiosignals in eine Vielzahl von Subbändern zu teilen und einen Subband-Normalisierungsfaktor für jedes Subband zu quantisieren;
eine Gruppiereinheit (22), die zum Gruppieren der Vielzahl von Subbändern in eine Vielzahl von Gruppen, wobei eine Gruppe der Vielzahl von Gruppen ein oder mehrere Subbänder umfasst, und Erfassen eines Gruppenparameters von jeder Gruppe konfiguriert ist, wobei der Gruppenparameter verwendet wird, um ein Signalcharakteristikum und ein Energieattribut eines Audiosignals der entsprechenden Gruppe zu repräsentieren;
eine erste Zuordnungseinheit (23), die zum Zuordnen von Kodierbits zu mindestens einer Gruppe gemäß dem Gruppenparameter jeder Gruppe konfiguriert ist, wobei eine Summe von Kodierbits, die der mindestens einen Gruppe zugeordnet sind, die Anzahl der Kodierbits ist, die für das Audiosignal verfügbar sind; und
eine zweite Zuordnungseinheit (24), die zum Zuordnen der Kodierbits, die der mindestens einen Gruppe zugeordnet sind, zu jedem Subband in jeder Gruppe der mindestens einen Gruppe gemäß dem Subband-Normalisierungsfaktor für jedes Subband in jeder Gruppe der mindestens einen Gruppe konfiguriert ist;
**dadurch gekennzeichnet, dass** die Gruppiereinheit (22) konfiguriert ist zum:

Erfassen einer Summe von gruppeninternen Subband-Normalisierungsfaktoren der jeweiligen Gruppe und eines Verhältnisses von Spitzenwert zu Durchschnitt der gruppeninternen Subband-Normalisierungsfaktoren der Gruppe, wobei der Subband-Normalisierungsfaktor für ein Subband definiert ist als:

$$Norm(p) = \sqrt{\frac{1}{L_p} \sum_{k=s_p}^{e_p} y(k)^2}, \qquad p = 0, \ldots, P-1$$

wobei $L_P$ die Anzahl der Koeffizienten y(k) in dem Subband repräsentiert, $s_p$ einen Startpunkt des Subbands repräsentiert, $e_p$ einen Endpunkt des Subbands repräsentiert, und P die Gesamtanzahl der Subbänder repräsentiert, wobei die Summe der gruppeninternen Subband-Normalisierungsfaktoren eine Summe der Subband-Normalisierungsfaktoren aller Subbänder in der Gruppe ist, und das Verhältnis von Spitzenwert zu Durchschnitt der gruppeninternen Subband-Normalisierungsfaktoren ein Verhältnis eines Spitzenwerts der gruppeninternen Subband-Normalisierungsfaktoren zu einem Durchschnittswert der gruppeninternen Subband-Normalisierungsfaktoren ist, wobei der Spitzenwert der gruppeninternen Subband-Normalisierungsfaktoren ein Maximalwert der Subband-Normalisierungsfaktoren aller Subbänder in der Gruppe ist und der Durchschnittswert der gruppeninternen Subband-Normalisierungsfaktoren ein Durchschnittswert der Subband-Normalisierungsfaktoren aller Subbänder in der Gruppe ist; und
Gewichten der Summe der gruppeninternen Subband-Normalisierungsfaktoren jeder Gruppe gemäß dem Verhältnis von Spitzenwert zu Durchschnitt der gruppeninternen Subband-Normalisierungsfaktoren von jeder Gruppe, um eine gewichtete Summe der gruppeninternen Subband-Normalisierungsfaktoren von jeder Gruppe zu erhalten;
wobei die erste Zuordnungseinheit konfiguriert ist zum:

Zuordnen von Kodierbits zu der mindestens einen Gruppe gemäß der gewichteten Summe der gruppeninternen Subband-Normalisierungsfaktoren jeder Gruppe, wobei die Summe von Kodierbits, die der mindestens einen Gruppe zugeordnet sind, die Anzahl der Kodierbits ist, die für das Audiosignal verfügbar sind;
wobei die Gruppiereinheit (22) spezifisch konfiguriert ist zum:

Vergleichen eines Verhältnisses von Spitzenwert zu Durchschnitt der gruppeninternen Subband-Normalisierungsfaktoren einer ersten Gruppe mit einem Verhältnis von Spitzenwert zu Durchschnitt der gruppeninternen Subband-Normalisierungsfaktoren einer zweiten Gruppe; und

falls der Vergleich zwischen dem Verhältnis von Spitzenwert zu Durchschnitt von gruppeninternen Subband-Normalisierungsfaktoren der ersten Gruppe und dem Verhältnis von Spitzenwert zu Durchschnitt von gruppeninternen Subband-Normalisierungsfaktoren der zweiten Gruppe größer als ein erster Schwellenwert ist,

Anpassen der Summe der gruppeninternen Subband-Normalisierungsfaktoren der ersten Gruppe gemäß einem ersten Gewichtungsfaktor, und Anpassen der Summe der gruppeninternen Subband-Normalisierungsfaktoren der zweiten Gruppe gemäß einem zweiten Gewichtungsfaktor.

12. Vorrichtung nach Anspruch 11, wobei die erste Zuordnungseinheit (23) spezifisch konfiguriert ist zum:
Ermitteln der Anzahl der Bits für die Gruppe gemäß einem Verhältnis der gewichteten Summe der gruppeninternen Subband-Normalisierungsfaktoren jeder Gruppe zu einer Summe der Subband-Normalisierungsfaktoren aller Subbänder in der Gruppe, und Zuordnen von Bits des Audiosignals zu der Gruppe gemäß der Anzahl der Bits für die Gruppe.

13. Vorrichtung nach Anspruch 11 oder 12, wobei die zweite Zuordnungseinheit (24) umfasst:

ein Ermittlungsmodul (241), das zum Ermitteln der Anzahl der Subbänder, denen Bits zugeordnet sind, in der Gruppe konfiguriert ist; und

ein Zuordnungsmodul (242), das zum Zuordnen von Kodierbits, die von dem Audiosignal sind und der Gruppe zugeordnet sind, gemäß Subband-Normalisierungsfaktoren in der Gruppe zu Subbändern, denen Bits zugeordnet sind, in der Gruppe konfiguriert ist, wobei die Anzahl der Subbänder, denen Bits zugeordnet sind, in der Gruppe der Anzahl der Subbänder, denen Bits zugeordnet sind, in der Gruppe entspricht.

14. Vorrichtung nach Anspruch 13, wobei das Ermittlungsmodul (241) spezifisch konfiguriert ist zum:

Ermitteln der Anzahl der Subbänder, denen Bits anfangs zugeordnet sind, in der Gruppe gemäß der Anzahl der Bits für die Gruppe und einem dritten Schwellenwert, wobei der dritte Schwellenwert eine kleinste Anzahl an Bits repräsentiert, die verwendet wurden, um einen normalisierten Spektralkoeffizienten zu quantisieren; und

Ermitteln, dass ein kleinerer Wert zwischen der Anzahl der Subbänder, denen Bits anfangs zugeordnet sind, in der Gruppe und der Gesamtanzahl der Subbänder in der Gruppe die Anzahl der Subbänder, denen Bits zugeordnet sind, in der Gruppe ist.

15. Vorrichtung nach Anspruch 13, wobei das Ermittlungsmodul (241) spezifisch konfiguriert ist zum:

Ermitteln der Anzahl der Subbänder, denen Bits anfangs zugeordnet sind, in der Gruppe gemäß der Anzahl der Bits für die Gruppe und einem dritten Schwellenwert, wobei der dritte Schwellenwert eine kleinste Anzahl an Bits repräsentiert, die verwendet wurden, um einen normalisierten Spektralkoeffizienten zu quantisieren; und

Vergleichen der Anzahl der Subbänder, denen Bits anfangs zugeordnet sind, in der Gruppe mit einem Produkt der Gesamtanzahl von Subbändern in der Gruppe und einem Skalierungsfaktor k, wobei der Skalierungsfaktor k verwendet wird, um die Gesamtanzahl der Subbänder in der Gruppe anzupassen; und

falls die Anzahl der Subbänder, denen Bits anfangs zugeordnet sind, in der Gruppe kleiner als das Produkt der Gesamtanzahl der Subbänder in der Gruppe und des Skalierungsfaktors k ist, Ermitteln, dass die Anzahl der Subbänder, denen Bits zugeordnet sind, in der Gruppe die Anzahl der Subbänder, denen Bits anfangs zugeordnet sind, in der Gruppe ist; falls die Anzahl der Subbänder, denen Bits anfangs zugeordnet sind, in der Gruppe größer als das Produkt der Gesamtanzahl der Subbänder in der Gruppe und des Skalierungsfaktors k ist, Ermitteln, dass die Anzahl der Subbänder, denen Bits zugeordnet sind, in der Gruppe die Gesamtanzahl der Subbänder in der Gruppe ist.

16. Vorrichtung nach einem der Ansprüche 13 bis 15, wobei das Zuordnungsmodul (242) spezifisch konfiguriert ist zum:

Auswählen der ersten N Subbänder mit größten Subband-Normalisierungsfaktoren aus allen Subbändern in der Gruppe als Zielsubbänder für die Zuordnung, wobei N die Anzahl der Subbänder ist, denen Bits in der Gruppe zugeordnet sind; und

Zuordnen der Anzahlen an Bits zu den N Subbändern in Folge gemäß Subband-Normalisierungsfaktoren der N Subbänder.

**17.** Vorrichtung nach Anspruch 11, wobei:
die erste Zuordnungseinheit (23) spezifisch konfiguriert ist zum:

Gruppieren von Subbändern in der Gruppe in eine Vielzahl von Subgruppen, und Erfassen eines Subgruppenparameters jeder Subgruppe; und
Zuordnen von Bits, die der Gruppe zugeordnet sind, zu jeder Subgruppe gemäß dem Subgruppenparameter jeder Subgruppe; und
die zweite Zuordnungseinheit (24) spezifisch konfiguriert ist zum:
Zuordnen von Bits, die von dem Audiosignal sind und jeder Subgruppe zugeordnet sind, zu jedem Subband in jeder Subgruppe gemäß dem Subband-Normalisierungsfaktor.

**18.** Vorrichtung nach einem der Ansprüche 11 bis 17, wobei die Gruppiereinheit (22) spezifisch konfiguriert ist zum:
Gruppieren von Subbändern mit derselben Bandbreite in eine Gruppe, so dass die Vielzahl der Subbänder in eine Vielzahl von Gruppen gruppiert ist.

**19.** Vorrichtung nach Anspruch 11, wobei Subbänder in jeder Gruppe der Vielzahl von Gruppen benachbart sind.

**Revendications**

**1.** Procédé d'allocation de bits de codage à un signal audio, comprenant les étapes suivantes :

conversion d'un signal audio dans le domaine temporel en un signal audio dans le domaine fréquentiel ; et
allocation de bits de codage au signal audio dans le domaine fréquentiel pour le codage ;
l'étape d'allocation des bits de codage au signal audio dans le domaine fréquentiel comprenant les étapes suivantes :

division (101) d'une bande de fréquences du signal audio en une pluralité de sous-bandes et quantification d'un facteur de normalisation de sous-bande de chaque sous-bande ;
regroupement (102) de la pluralité de sous-bandes en une pluralité de groupes, un groupe de la pluralité de groupes comprenant une ou plusieurs sous-bandes, et acquisition d'un paramètre de groupe de chaque groupe, le paramètre de groupe servant à représenter une caractéristique de signal et un attribut d'énergie d'un signal audio du groupe correspondant ;
allocation (103) de bits de codage à au moins un groupe selon le paramètre de groupe de chaque groupe, une somme de bits de codage alloués à l'au moins un groupe représentant le nombre de bits de codage disponibles pour le signal audio ; et
allocation (104) des bits de codage alloués à l'au moins un groupe à chaque sous-bande dans chaque groupe de l'au moins un groupe selon le facteur de normalisation de sous-bande de chaque sous-bande dans chaque groupe de l'au moins un groupe ;
**caractérisé en ce que** :
l'étape d'acquisition d'un paramètre de groupe de chaque groupe comprend les étapes suivantes :

acquisition d'une somme de facteurs de normalisation de sous-bande intra-groupe du groupe respectif et d'un rapport valeur de crête sur valeur moyenne de facteurs de normalisation de sous-bande intra-groupe du groupe, le facteur de normalisation de sous-bande pour une sous-bande étant défini comme :

$$Norm(p) = \sqrt{\frac{1}{L_p} \sum_{k=s_p}^{e_p} y(k)^2}, \qquad p = 0, \ldots, P-1$$

où $L_p$ représente le nombre de coefficients y(k) dans la sous-bande, $s_p$ représente un point de départ de la sous-bande, $e_p$ représente un point de fin de la sous-bande et $P$ représente le nombre total de sous-bandes, la somme de facteurs de normalisation de sous-bande intra-groupe représentant une somme de facteurs de normalisation de sous-bande de toutes les sous-bandes dans le groupe et le rapport valeur de crête sur valeur moyenne de facteurs de normalisation de sous-bande intra-groupe représentant un rapport d'une valeur de crête des facteurs de normalisation de sous-bande intra-groupe sur une valeur moyenne des facteurs de normalisation de sous-bande intra-groupe, la valeur de crête des facteurs de normalisation de sous-bande intra-groupe représentant une valeur maximale de facteurs de normalisation de sous-bande de toutes les sous-bandes dans le groupe et la valeur moyenne des facteurs de normalisation de sous-bande intra-groupe représentant une valeur moyenne de facteurs de normalisation de sous-bande de toutes les sous-bandes dans le groupe ; et

pondération de la somme de facteurs de normalisation de sous-bande intra-groupe de chaque groupe selon le rapport valeur de crête sur valeur moyenne de facteurs de normalisation de sous-bande intra-groupe de chaque groupe aux fins d'obtenir une somme pondérée de facteurs de normalisation de sous-bande intra-groupe de chaque groupe ; et

l'étape d'allocation (103) de bits de codage à au moins un groupe selon le paramètre de groupe de chaque groupe comprend l'étape suivante :

> allocation de bits de codage à l'au moins un groupe selon la somme pondérée de facteurs de normalisation de sous-bande intra-groupe de chaque groupe, la somme de bits de codage alloués à l'au moins un groupe représentant le nombre de bits de codage disponibles pour le signal audio ;
> l'étape de pondération de la somme de facteurs de normalisation de sous-bande intra-groupe de chaque groupe selon le rapport valeur de crête sur valeur moyenne de facteurs de normalisation de sous-bande intra-groupe de chaque groupe comprenant les étapes suivantes :
>
>> comparaison d'un rapport valeur de crête sur valeur moyenne de facteurs de normalisation de sous-bande intra-groupe d'un premier groupe à un rapport valeur de crête sur valeur moyenne de facteurs de normalisation de sous-bande intra-groupe d'un deuxième groupe ; et
>> si la comparaison entre le rapport valeur de crête sur valeur moyenne de facteurs de normalisation de sous-bande intra-groupe du premier groupe et le rapport valeur de crête sur valeur moyenne de facteurs de normalisation de sous-bande intra-groupe du deuxième groupe est supérieur à un premier seuil, ajustement de la somme de facteurs de normalisation de sous-bande intra-groupe du premier groupe selon un premier facteur de pondération et ajustement de la somme de facteurs de normalisation de sous-bande intra-groupe du deuxième groupe selon un deuxième facteur de pondération.

2. Procédé selon la revendication 1, dans lequel l'étape d'allocation de bits de codage à l'au moins un groupe selon la somme pondérée de facteurs de normalisation de sous-bande intra-groupe de chaque groupe, la somme de bits de codage alloués à l'au moins un groupe représentant le nombre de bits de codage du signal audio, comprend l'étape suivante :
détermination du nombre de bits pour le groupe selon un rapport de la somme pondérée de facteurs de normalisation de sous-bande intra-groupe de chaque groupe sur une somme de facteurs de normalisation de sous-bande de toutes les sous-bandes dans le groupe, et allocation de bits du signal audio au groupe selon le nombre de bits pour le groupe.

3. Procédé selon la revendication 1 ou 2, dans lequel l'étape d'allocation des bits de codage alloués à l'au moins un groupe à chaque sous-bande dans chaque groupe de l'au moins un groupe selon le facteur de normalisation de sous-bande de chaque sous-bande dans chaque groupe de l'au moins un groupe comprend les étapes suivantes :

> détermination du nombre de sous-bandes auxquelles des bits sont alloués dans le groupe ; et
> allocation, selon des facteurs de normalisation de sous-bande dans le groupe, de bits de codage du signal audio qui sont alloués au groupe à des sous-bandes auxquelles des bits sont alloués dans le groupe, le nombre de sous-bandes auxquelles des bits sont alloués dans le groupe étant égal au nombre de sous-bandes auxquelles des bits sont alloués dans le groupe.

4. Procédé selon la revendication 3, dans lequel l'étape de détermination du nombre de sous-bandes auxquelles des bits sont alloués dans le groupe comprend les étapes suivantes :

> détermination du nombre de sous-bandes auxquelles des bits sont initialement alloués dans le groupe selon le nombre de bits pour le groupe et un troisième seuil, le troisième seuil représentant un plus petit nombre de bits utilisés pour quantifier un coefficient spectral normalisé ; et
> détermination du nombre de sous-bandes auxquelles des bits sont alloués dans le groupe selon le nombre de sous-bandes auxquelles des bits sont initialement alloués dans le groupe et le nombre total de sous-bandes dans le groupe.

**5.** Procédé selon la revendication 4, dans lequel l'étape de détermination du nombre de sous-bandes auxquelles des bits sont alloués dans le groupe selon le nombre de sous-bandes auxquelles des bits sont initialement alloués dans le groupe et le nombre total de sous-bandes dans le groupe comprend l'étape suivante :

détermination qu'une plus petite valeur entre le nombre de sous-bandes auxquelles des bits sont initialement alloués dans le groupe et le nombre total de sous-bandes dans le groupe représente le nombre de sous-bandes auxquelles des bits sont alloués dans le groupe.

**6.** Procédé selon la revendication 4, dans lequel l'étape de détermination du nombre de sous-bandes auxquelles des bits sont alloués dans le groupe selon le nombre de sous-bandes auxquelles des bits sont initialement alloués dans le groupe et le nombre total de sous-bandes dans le groupe comprend les étapes suivantes :

comparaison du nombre de sous-bandes auxquelles des bits sont initialement alloués dans le groupe à un produit du nombre total de sous-bandes dans le groupe et d'un facteur d'échelle k, le facteur d'échelle k servant à ajuster le nombre total de sous-bandes dans le groupe ; et
si le nombre de sous-bandes auxquelles des bits sont initialement alloués dans le groupe est inférieur au produit du nombre total de sous-bandes dans le groupe et du facteur d'échelle k, détermination que le nombre de sous-bandes auxquelles des bits sont alloués dans le groupe représente le nombre de sous-bandes auxquelles des bits sont initialement alloués dans le groupe ; si le nombre de sous-bandes auxquelles des bits sont initialement alloués dans le groupe est supérieur au produit du nombre total de sous-bandes dans le groupe et du facteur d'échelle k, détermination que le nombre de sous-bandes auxquelles des bits sont alloués dans le groupe représente le nombre total de sous-bandes dans le groupe.

**7.** Procédé selon l'une quelconque des revendications 3 à 6, dans lequel l'étape d'allocation, selon des facteurs de normalisation de sous-bande dans le groupe, de bits de codage du signal audio qui sont alloués au groupe à des sous-bandes auxquelles des bits sont alloués dans le groupe comprend les étapes suivantes :

sélection, parmi toutes les sous-bandes dans le groupe, des N premières sous-bandes dont les facteurs de normalisation de sous-bande sont les plus grands au titre de sous-bandes cibles pour l'allocation, N représentant le nombre de sous-bandes auxquelles des bits sont alloués dans le groupe ; et
allocation séquentielle des nombres de bits aux N sous-bandes selon des facteurs de normalisation de sous-bande des N sous-bandes.

**8.** Procédé selon la revendication 1, dans lequel l'étape d'allocation de bits de codage à au moins un groupe selon le paramètre de groupe de chaque groupe, une somme de bits de codage alloués à l'au moins un groupe représentant le nombre de bits de codage du signal audio, comprend les étapes suivantes :

division de sous-bandes dans le groupe en une pluralité de sous-groupes, et acquisition d'un paramètre de sous-groupe de chaque sous-groupe ; et
allocation de bits alloués au groupe à chaque sous-groupe selon le paramètre de sous-groupe de chaque sous-groupe ; et
l'étape d'allocation des bits de codage alloués à l'au moins un groupe à chaque sous-bande dans chaque groupe de l'au moins un groupe selon le facteur de normalisation de sous-bande de chaque sous-bande dans chaque groupe de l'au moins un groupe comprend l'étape suivante :
allocation de bits du signal audio qui sont alloués à chaque sous-groupe à chaque sous-bande dans chaque sous-groupe selon le facteur de normalisation de sous-bande.

**9.** Procédé selon l'une quelconque des revendications 1 à 8, dans lequel l'étape de regroupement de la pluralité de sous-bandes en une pluralité de groupes comprend l'étape suivante :
regroupement de sous-bandes d'une même largeur de bande en un groupe, de façon à regrouper la pluralité de sous-bandes en une pluralité de groupes.

**10.** Procédé selon la revendication 1, dans lequel des sous-bandes dans chaque groupe de la pluralité de groupes sont adjacentes.

**11.** Appareil d'allocation de bits de codage à un signal audio, l'appareil étant configuré pour convertir un signal audio dans le domaine temporel en un signal audio dans le domaine fréquentiel et pour allouer des bits de codage au signal audio dans le domaine fréquentiel pour le codage, l'appareil comprenant :

une unité de quantification de sous-bande (21), configurée pour diviser une bande de fréquences du signal audio en une pluralité de sous-bandes et quantifier un facteur de normalisation de sous-bande de chaque sous-bande ;

une unité de regroupement (22), configurée pour regrouper la pluralité de sous-bandes en une pluralité de groupes, un groupe de la pluralité de groupes comprenant une ou plusieurs sous-bandes, et acquérir un paramètre de groupe de chaque groupe, le paramètre de groupe servant à représenter une caractéristique de signal et un attribut d'énergie d'un signal audio du groupe correspondant ;

une première unité d'allocation (23), configurée pour allouer des bits de codage à au moins un groupe selon le paramètre de groupe de chaque groupe, une somme de bits de codage alloués à l'au moins un groupe représentant le nombre de bits de codage disponibles pour le signal audio ; et

une deuxième unité d'allocation (24), configurée pour allouer des bits de codage alloués à l'au moins un groupe à chaque sous-bande dans chaque groupe de l'au moins un groupe selon le facteur de normalisation de sous-bande de chaque sous-bande dans chaque groupe de l'au moins un groupe,

**caractérisé en ce que** :

l'unité de regroupement (22) est configurée pour :

acquérir une somme de facteurs de normalisation de sous-bande intra-groupe du groupe respectif et un rapport valeur de crête sur valeur moyenne de facteurs de normalisation de sous-bande intra-groupe du groupe, le facteur de normalisation de sous-bande pour une sous-bande étant défini comme :

$$Norm(p) = \sqrt{\frac{1}{L_p} \sum_{k=s_p}^{e_p} y(k)^2}, \qquad p = 0, \ldots, P-1$$

où $L_p$ représente le nombre de coefficients y(k) dans la sous-bande, $s_p$ représente un point de départ de la sous-bande, $e_p$ représente un point de fin de la sous-bande et $P$ représente le nombre total de sous-bandes, la somme de facteurs de normalisation de sous-bande intra-groupe représentant une somme de facteurs de normalisation de sous-bande de toutes les sous-bandes dans le groupe et le rapport valeur de crête sur valeur moyenne de facteurs de normalisation de sous-bande intra-groupe représentant un rapport d'une valeur de crête des facteurs de normalisation de sous-bande intra-groupe sur une valeur moyenne des facteurs de normalisation de sous-bande intra-groupe, la valeur de crête des facteurs de normalisation de sous-bande intra-groupe représentant une valeur maximale de facteurs de normalisation de sous-bande de toutes les sous-bandes dans le groupe et la valeur moyenne des facteurs de normalisation de sous-bande intra-groupe représentant une valeur moyenne de facteurs de normalisation de sous-bande de toutes les sous-bandes dans le groupe ; et

pondérer la somme de facteurs de normalisation de sous-bande intra-groupe de chaque groupe selon le rapport valeur de crête sur valeur moyenne de facteurs de normalisation de sous-bande intra-groupe de chaque groupe aux fins d'obtenir une somme pondérée de facteurs de normalisation de sous-bande intra-groupe de chaque groupe ;

la première unité d'allocation (22) est configurée pour :

allouer des bits de codage à l'au moins un groupe selon la somme pondérée de facteurs de normalisation de sous-bande intra-groupe de chaque groupe, la somme de bits de codage alloués à l'au moins un groupe représentant le nombre de bits de codage disponibles pour le signal audio ;

l'unité de regroupement (22) étant plus particulièrement configurée pour :

comparer un rapport valeur de crête sur valeur moyenne de facteurs de normalisation de sous-bande intra-groupe d'un premier groupe à un rapport valeur de crête sur valeur moyenne de facteurs de normalisation de sous-bande intra-groupe d'un deuxième groupe ; et

si la comparaison entre le rapport valeur de crête sur valeur moyenne de facteurs de normalisation de sous-bande intra-groupe du premier groupe et le rapport valeur de crête sur valeur moyenne de facteurs de normalisation de sous-bande intra-groupe du deuxième groupe est supérieur à un premier seuil, ajuster la somme de facteurs de normalisation de sous-bande intra-groupe du premier groupe selon un premier facteur de pondération et ajuster la somme de facteurs de normalisation de sous-bande intra-groupe du deuxième groupe selon un deuxième facteur de pondération.

**12.** Appareil selon la revendication 11, dans lequel la première unité d'allocation (23) est plus particulièrement configurée pour :

déterminer le nombre de bits pour le groupe selon un rapport de la somme pondérée de facteurs de normalisation de sous-bande intra-groupe de chaque groupe sur une somme de facteurs de normalisation de sous-bande de toutes les sous-bandes dans le groupe, et allouer des bits du signal audio au groupe selon le nombre de bits pour le groupe.

13. Appareil selon la revendication 11 ou 12, dans lequel la deuxième unité d'allocation (24) comprend :

un module de détermination (241), configuré pour déterminer le nombre de sous-bandes auxquelles des bits sont alloués dans le groupe ; et

un module d'allocation (242), configuré pour allouer, selon des facteurs de normalisation de sous-bande dans le groupe, des bits de codage du signal audio qui sont alloués au groupe à des sous-bandes auxquelles des bits sont alloués dans le groupe, le nombre de sous-bandes auxquelles des bits sont alloués dans le groupe étant égal au nombre de sous-bandes auxquelles des bits sont alloués dans le groupe.

14. Appareil selon la revendication 13, dans lequel le module de détermination (241) est plus particulièrement configuré pour :

déterminer le nombre de sous-bandes auxquelles des bits sont initialement alloués dans le groupe selon le nombre de bits pour le groupe et un troisième seuil, le troisième seuil représentant un plus petit nombre de bits utilisés pour quantifier un coefficient spectral normalisé ; et

déterminer qu'une plus petite valeur entre le nombre de sous-bandes auxquelles des bits sont initialement alloués dans le groupe et le nombre total de sous-bandes dans le groupe représente le nombre de sous-bandes auxquelles des bits sont alloués dans le groupe.

15. Appareil selon la revendication 13, dans lequel le module de détermination (241) est plus particulièrement configuré pour :

déterminer le nombre de sous-bandes auxquelles des bits sont initialement alloués dans le groupe selon le nombre de bits pour le groupe et un troisième seuil, le troisième seuil représentant un plus petit nombre de bits utilisés pour quantifier un coefficient spectral normalisé ; et

comparer le nombre de sous-bandes auxquelles des bits sont initialement alloués dans le groupe à un produit du nombre total de sous-bandes dans le groupe et d'un facteur d'échelle k, le facteur d'échelle k servant à ajuster le nombre total de sous-bandes dans le groupe ; et

si le nombre de sous-bandes auxquelles des bits sont initialement alloués dans le groupe est inférieur au produit du nombre total de sous-bandes dans le groupe et du facteur d'échelle k, déterminer que le nombre de sous-bandes auxquelles des bits sont alloués dans le groupe représente le nombre de sous-bandes auxquelles des bits sont initialement alloués dans le groupe ; si le nombre de sous-bandes auxquelles des bits sont initialement alloués dans le groupe est supérieur au produit du nombre total de sous-bandes dans le groupe et du facteur d'échelle k, déterminer que le nombre de sous-bandes auxquelles des bits sont alloués dans le groupe représente le nombre total de sous-bandes dans le groupe.

16. Appareil selon l'une quelconque des revendications 13 à 15, dans lequel le module d'allocation (242) est plus particulièrement configuré pour :

sélectionner, parmi toutes les sous-bandes dans le groupe, les N premières sous-bandes dont les facteurs de normalisation de sous-bande sont les plus grands au titre de sous-bandes cibles pour l'allocation, N représentant le nombre de sous-bandes auxquelles des bits sont alloués dans le groupe ; et

allouer séquentiellement les nombres de bits aux N sous-bandes selon des facteurs de normalisation de sous-bande des N sous-bandes.

17. Appareil selon la revendication 11, dans lequel :

la première unité d'allocation (23) est plus particulièrement configurée pour :

regrouper des sous-bandes dans le groupe en une pluralité de sous-groupes, et acquérir un paramètre de sous-groupe de chaque sous-groupe ; et

allouer des bits alloués au groupe à chaque sous-groupe selon le paramètre de sous-groupe de chaque sous-groupe ; et

la deuxième unité d'allocation (24) est plus particulièrement configurée pour :
allouer des bits du signal audio qui sont alloués à chaque sous-groupe à chaque sous-bande dans chaque sous-groupe selon le facteur de normalisation de sous-bande.

18. Appareil selon l'une quelconque des revendications 11 à 17, dans lequel l'unité de regroupement (22) est plus particulièrement configurée pour :
regrouper des sous-bandes d'une même largeur de bande en un groupe, de façon à regrouper la pluralité de sous-bandes en une pluralité de groupes.

19. Appareil selon la revendication 11, dans lequel des sous-bandes dans chaque groupe de la pluralité de groupes sont adjacentes.

Divide a frequency band of an audio signal into a plurality of subbands, and quantize a subband normalization factor of each subband ⟋ 101

Group all subbands into a plurality of groups, and acquire a group parameter of each group ⟋ 102

Allocate coding bits to at least one group according to the group parameter of each group ⟋ 103

Allocate the coding bits allocated to the group to each subband in the group according to the subband normalization factor ⟋ 104

FIG. 1

20

| Subband quantizing unit | ⟋ 21 |

| Grouping unit | ⟋ 22 |

| First allocating unit | ⟋ 23 |

⟋ 24

241 — Second allocating unit ⟋ 242

| Determining module | | Allocating module |

FIG. 2

FIG. 3

**EP 2 863 388 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2402939 A1